# EUROPEAN PATENT SPECIFICATION

(11) **EP 4 549 136 B1**
(45) Date of publication and mention of the grant of the patent: **18.11.2026**
(21) Application number: 24202480.0
(22) Date of filing: 25.09.2024
(51) Int. Cl.: B29C 70/54, B29C 45/56, B29C 70/44, B29C 70/46, B29C 70/48

(54) **COMPRESSION RESIN TRANSFER INFUSION METHODS**
INFUSIONSVERFAHREN MIT KOMPRESSIONSHARZÜBERTRAGUNG
PROCÉDÉS DE PERFUSION PAR TRANSFERT DE RÉSINE DE COMPRESSION

(30) Priority: 03.11.2023 US 202318501423
(43) Date of publication of application: 07.05.2025
(73) Proprietor: The Boeing Company, Arlington, VA 22202 (US)
(72) Inventor: Fry, Jessica Offutt, Arlington, 22202 (US); Wadsworth, Heather Marie, Arlington, 22202 (US); Reed, David Earl, Arlington, 22202 (US); Gordon, Kevin Donald, Arlington, 22202 (US); Brei, Mark R., Arlington, 22202 (US); Klusman, Chloe E., Arlington, 22202 (US)
(74) Representative: Arnold & Siedsma

(56) References cited:
- EP-B1- 2 855 122
- WO-A1-2022/081861
- WO-A1-2022/265727

## Description

### BACKGROUND INFORMATION

### 1. Field:

The present disclosure generally relates to methods for forming composite structures, and more particularly, to high rate resin infusion technology.

### 2. Background:

Composite materials and structures, including resin-infused carbon-fiber laminates, are commonly used in applications requiring high strength and light weight. For example, in the aerospace industry, composite structures are used in increasing quantities to form the fuselage, wings, and other components of aircraft. However, conventional methods and systems for forming composite structures are often time- and labor-intensive, especially for composite structures combining complementary pieces, such as fuselage skins and stringers into a single composite structure. Further, using current aerospace composite-fabrication materials and methods to produce composite structures at high rates would require multiple sets of tooling and processing equipment along with the factory-floor space required to accommodate said equipment. Thus, fabricating high-quality composite structures with aerospace-grade materials to meet performance characteristics at high rates using current production methods would be difficult and expensive, limiting the rate of production at an affordable cost.

WO 2022/081861 A1, according to its abstract, states a method for forming a composite part including placing a preform in a constant- temperature mold, infusing the preform in the constant-temperature mold with a resin to form a resin-infused preform, and curing the resin-infused preform to form a cured composite part.

Therefore, it would be desirable to have a method and apparatus that takes into account at least some of the issues discussed above, as well as other possible issues. For example, it would be desirable to present systems and methods for forming composite structures that offer improvements in a rate of production, particularly for composite structures of larger size and complexity, as typically associated with the aerospace industry.

### SUMMARY

An example of the present disclosure provides a method of compression resin transfer infusion. A dry preform with a thermoplastic veil is placed onto a lower mold die. An upper mold die is placed over the lower mold die to create an infusion and cure tool having a sealed cavity holding the dry preform, the sealed cavity defining a gap, the gap corresponding to a cavity volume equivalent to an amount of resin to infuse the dry preform. Resin is injected into the gap of the sealed cavity while the infusion and cure tool is maintained at an infusion temperature. The upper mold die is lowered to infuse the dry preform to form a resin-infused preform. The resin-infused preform is cured within the infusion and cure tool to form a cured composite part, wherein curing occurs at a curing temperature higher than the infusion temperature.

The curing temperature is sufficient to cause the thermoplastic veil to expand and melt.

The method may further include lowering a temperature of the infusion and cure tool after the curing from the curing temperature at a ramp down rate, wherein the curing temperature and the ramp down rate are selected to generate cavitation bubbles in the thermoplastic veil in the cured composite part.

The upper mold die may be lowered at a closing speed of about 0.254-5.08 mm/min (0.01-0.2 in/min).

Curing may take between 45-180 minutes.

The infusion temperature may be in a range of 130-160 degrees Celsius.

The curing temperature may be in a range of 165-190 degrees Celsius.

A temperature ramp to cure between the infusion temperature and the curing temperature may have a ramp rate of 1-3 degrees Celsius/min.

A difference between the infusion temperature and the curing temperature may be 40 degrees Celsius or less.

The method may include removing the cured composite part from the infusion and cure tool while the infusion and cure tool is at a temperature in a range of 130-160 degrees Celsius.

Another illustrative example of the present disclosure, useful for understanding the claimed subject-matter according to the appended claims which determine the scope of protection, provides a method of compression resin transfer infusion. Resin is injected into a gap of a sealed cavity of an infusion and cure tool while the infusion and cure tool is maintained at an infusion temperature, preferably in the range of 130-160 degrees Celsius. An upper mold die of the infusion and cure tool is lowered to infuse a dry preform in the sealed cavity with the resin, preferably in a resin latency condition, to form a resin-infused preform. The temperature of the infusion and cure tool is increased from the infusion temperature to a curing temperature at a desired ramp rate, such as a ramp rate of 1-3 degrees Celsius. The resin-infused preform is cured in the infusion and cure tool to form a cured composite part, wherein curing occurs at the curing temperature higher than the infusion temperature, such as in a range of 165-190 degrees Celsius, wherein the curing temperature is sufficient to cause a thermoplastic veil in the dry preform to expand and melt, preferably thereby joining the resin to the thermoplastic veil.

The infusion temperature may be in a range of 130-160 degrees Celsius, wherein the ramp rate may be 1-3 degrees Celsius, and the curing temperature may be in a range of 165-190 degrees Celsius.

The upper mold die may be lowered at a closing speed of about 0.254-5.08 mm/min (0.01-0.2 in/min).

A pressure within the sealed cavity may be about 68.9-689.5 kPa (10-100 psig) after lowering the upper mold die, and wherein the pressure is maintained at about 68.9-689.5 kPa (10-100 psig) during curing.

Curing may take between 45-180 minutes.

A difference between the infusion temperature and the curing temperature may be 40 degrees Celsius or less.

The method may further include removing the cured composite part from the infusion and cure tool while the infusion and cure tool is at a temperature in a range of 130-160 degrees Celsius.

The method may further include lowering a temperature of the infusion and cure tool after the curing from the curing temperature at a ramp down rate, wherein the curing temperature and the ramp down rate are selected to generate cavitation bubbles in the thermoplastic veil in the cured composite part.

Injecting the resin and lowering the upper mold die may occur in 30 min or less.

Yet another illustrative example of the present disclosure, useful for understanding the claimed subject-matter according to the appended claims which determine the scope of protection, provides a method of compression resin transfer infusion to form cavitation bubbles in the cured composite part. Resin is injected into a gap of a sealed cavity of an infusion and cure tool while the infusion and cure tool is maintained at an infusion temperature, preferably in the range of 130-160 degrees Celsius. An upper mold die of the infusion and cure tool is lowered, preferably at a closing speed of about 0.254-5.08 mm/min (0.01-0.2 in/min), to infuse a dry preform in the sealed cavity through its thickness with the resin to form a resin-infused preform, the dry preform comprising a thermoplastic veil. The temperature of the infusion and cure tool is increased from the infusion temperature, particularly to expand the thermoplastic veil while it melts, and preferably to a curing temperature. The resin-infused preform is cured in the infusion and cure tool to form a cured composite part, preferably wherein curing occurs at the curing temperature, and further preferably in a range of 165-190 degrees Celsius, and/or at a curing pressure in a range of about 68.9-689.5 kPa (10-100 psig). A temperature of the infusion and cure tool is lowered after curing, particularly to contract the thermoplastic veil in the cured composite part as the thermoplastic veil cools below a melting temperature of the thermoplastic veil, to generate cavitation bubbles in the thermoplastic veil, particularly as the thermoplastic veil cools below a melting temperature of the thermoplastic veil.

The infusion temperature may be in a range of 130-160 degrees Celsius, wherein curing may be performed at a curing temperature in a range of 165-190 degrees Celsius.

Lowering the upper mold die of the infusion and cure tool may be performed at a closing speed of about 0.254-5.08 mm/min (0.01-0.2 in/min). The curing temperature is sufficient to cause the thermoplastic veil in the resin-infused preform to expand and melt

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of an aircraft in accordance with an illustrative example;
**Figure 2** is an illustration of a block diagram of a manufacturing environment in accordance with an illustrative example;
**Figure 3** is an illustration of a temperature chart for an infusion temperature and curing temperature for a high rate resin infusion method in accordance with an illustrative example;
**Figure 4** is an illustration of a resin infusion and cure tool in accordance with an illustrative example;
**Figure 5** is an illustration of interactions between a thermoplastic veil and resin prior to curing in accordance with an illustrative example;
**Figure 6** is an illustration of interactions between a thermoplastic veil and resin during curing in accordance with an illustrative example;
**Figure 7** is an illustration of interactions between a thermoplastic veil and resin after curing in accordance with an illustrative example;
**Figure 8** is a flowchart of a method of compression resin transfer infusion in accordance with an illustrative example;
**Figure 9** is a flowchart of a method of compression resin transfer infusion in accordance with an illustrative example;
**Figure 10** is a flowchart of a method of compression resin transfer infusion to form cavitation bubbles in the cured composite part in accordance with an illustrative example;
**Figure 11** is an illustration of an aircraft manufacturing and service method in a form of a block diagram in accordance with an illustrative example; and
**Figure 12** is an illustration of an aircraft in a form of a block diagram in which an illustrative example may be implemented.

### DETAILED DESCRIPTION

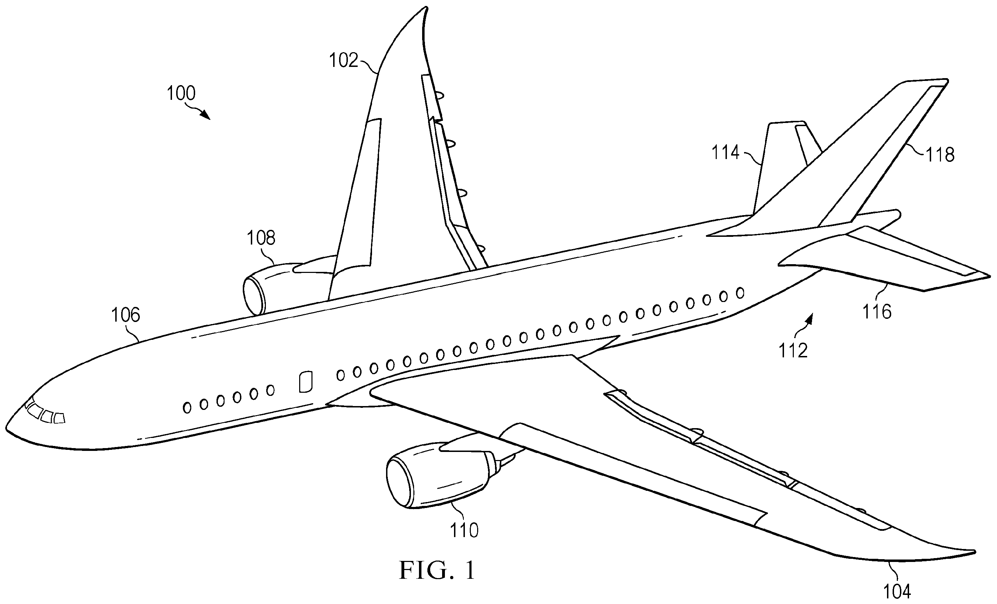

Turning now to **Figure 1****,** an illustration of an aircraft is depicted in accordance with an illustrative example. Aircraft **100** has wing **102** and wing **104** attached to body **106.** Aircraft **100** includes engine **108** attached to wing **102** and engine **110** attached to wing **104.**

Body **106** has tail section **112.** Horizontal stabilizer **114,** horizontal stabilizer **116,** and vertical stabilizer **118** are attached to tail section **112** of body **106.**

Aircraft **100** is an example of an aircraft that can have composite structures formed using compression resin transfer infusion methods. In some illustrative examples, portions of body **106,** wing **102,** or wing **104** can include a composite structure formed using compression resin transfer infusion methods.

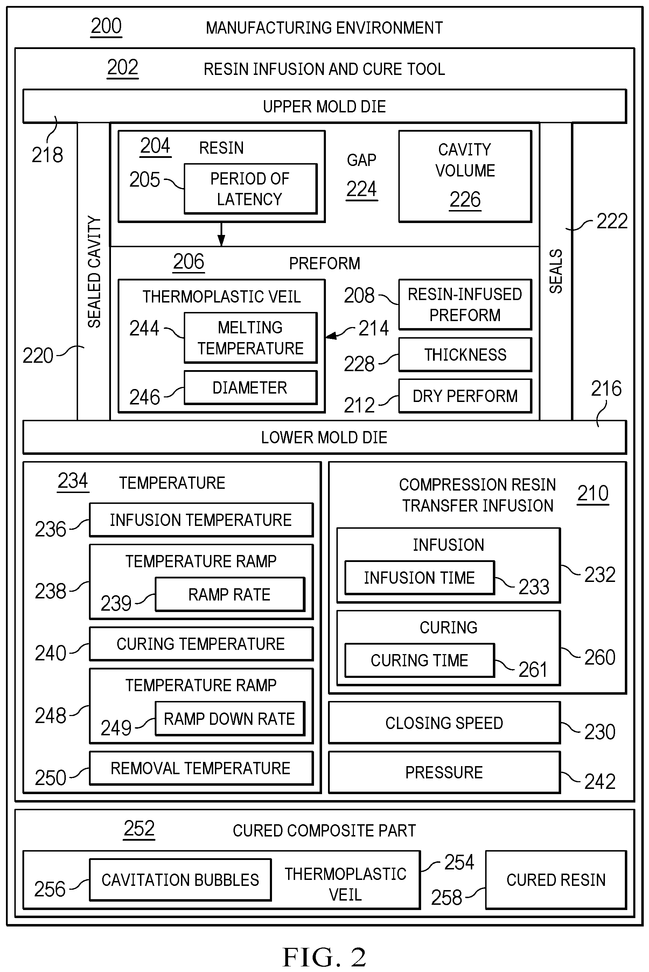

Turning now to **Figure 2****,** an illustration of a block diagram of a manufacturing environment is depicted in accordance with an illustrative example. Resin infusion and cure tool **202** in manufacturing environment is used to infuse resin **204** into preform **206** and cure resin-infused preform **208.** Compression resin transfer infusion **210** performed using resin infusion and cure tool **202** utilizes multiple temperatures.

Resin infusion and cure tool **202** comprises upper mold die **218** and lower mold die **216** sealed together by seals **222.** Sealed cavity **220** is present between upper mold die **218** and lower mold die **216.**

Compression resin transfer infusion **210** comprises placing dry preform **212** with thermoplastic veil **214** onto lower mold die **216** of resin infusion and cure tool **202.** The raw material of dry preform **212** can be formed of any desirable type of fiber. In some illustrative examples, dry preform **212** can have a carbon-fiber content up to 70 weight percent. In some illustrative examples, the raw material of dry preform **212** can include carbon fiber with a knit thread, carbon fiber with a knit thread and a thermoplastic veil, or carbon fiber with a veil. In some illustrative examples, dry preform **212** material can include carbon-fiber-based fabrics, such as non-crimp fabrics (NCFs). In some illustrative examples, dry preform **212** material is a dry multiaxial non-crimped fabric (MA-NCF). In some illustrative examples, dry preform 212 material is a dry unidirectional non-crimped fabric (UD-NCF).

Upper mold die **218** is placed over lower mold die **216** to create infusion and cure tool **202** having sealed cavity **220** holding dry preform **212.** Sealed cavity **220** defines gap **224.** Gap **224** corresponds to cavity volume **226** equivalent to an amount of resin **204** to infuse dry preform **212.** Resin **204** is injected into gap **224** of sealed cavity **220** while infusion and cure tool **202** is maintained at infusion temperature **236.**

In some illustrative examples, resin **204** is an epoxy resin. The resin can have a period of latency **205.** In some illustrative examples, resin **204** comprises a premixed and degassed epoxy resin having period of latency **205.** In some illustrative examples, resin **204** can include epoxies, cyanate esters, benzoxazines, bismaleimides, polyimides, cross-linkable thermoplastics, and in situ polymerizable thermoplastics, or combination thereof. In some illustrative examples, resin **204** can include, without limitation, epoxy/cyanate esters and epoxy/benzoxazines.

As used herein, period of latency **205** of resin **204** refers to the time before unacceptable increases in resin viscosity are reached after mixing the components of resin **204.** For example, an epoxy resin can be formed by mixing an epoxy component with a hardener, such as an amine. Once mixed, the epoxy resin will crosslink, increasing its viscosity. The resin can have a period of latency from about 20 minutes to about 1 hour. For example, the resin can have a period of latency of about 30 minutes or less.

Upper mold die **218** is lowered to infuse dry preform **212** to form resin-infused preform **208.** Lowering upper mold die **218** infuses resin **204** into dry preform **212** through thickness **228** of dry preform **212.**

Aspects of infusion **232,** including closing speed **230,** infusion temperature **236,** and infusion time **233,** are configured to produce cured composite part **252** with desirable values for stiffness and strength. In some illustrative examples, aspects of infusion **232,** including closing speed **230,** infusion temperature **236,** and infusion time **233,** are configured to reduce processing time for cured composite part **252.** In some illustrative examples, upper mold die **218** is lowered at closing speed **230** of about 0.254-5.08 mm/min (0.01-0.2 in/min). In some illustrative examples, infusion temperature **236** is in the range of 130-160 degrees Celsius.

Resin-infused preform **208** is cured within infusion and cure tool **202** to form cured composite part **252.** Curing **260** occurs at curing temperature **240** higher than infusion temperature **236.** Curing temperature **240** is sufficient to cause thermoplastic veil **214** to expand and melt. To bond sufficiently to resin **204,** thermoplastic veil **214** at least softens. In some illustrative examples, curing temperature **240** is at least melting temperature **244** of thermoplastic veil **214.**

Temperature **234** of infusion and cure tool **202** is lowered after curing **260** from curing temperature **240** at ramp down rate **249.** Curing temperature **240** and ramp down rate **249** are selected to produce desired bonding between thermoplastic veil **254** and resin **204** in cured composite part **252.** Curing temperature **240** and ramp down rate **249** are selected to generate cavitation bubbles **256** in thermoplastic veil **254** in cured composite part **252.** In some illustrative examples, cavitation bubbles **256** are an indication of a desired level of bonding between thermoplastic veil **254** and resin **204** in cured composite part **252.**

Time, temperature, pressure **242,** and other aspects of curing **260** are controlled to produce cured composite part **252** with desired stiffness and strength. In some illustrative examples, curing **260** takes between 45-180 minutes. In some illustrative examples, curing temperature **240** is in the range of 165-190 degrees Celsius. In some illustrative examples, temperature ramp **238** to cure between infusion temperature **236** and curing temperature **240** has ramp rate **239** of 1-3 degrees Celsius/min. In some illustrative examples, a difference between infusion temperature **236** and curing temperature **240** is 40 degrees Celsius or less. In some illustrative examples, pressure **242** within sealed cavity **220** is about 68.9-689.5 kPa (10-100 psig) after lowering upper mold die **218,** and pressure **242** is maintained at about 68.9-689.5 kPa (10-100 psig) during curing **260.**

Curing temperature **240** is selected based on resin **204** and thermoplastic veil **214.** In some illustrative examples, curing temperature **240** can be a temperature from about 170°C to about 190°C. Curing temperature **240** is selected to generate desirable bonding between resin **204** and thermoplastic veil **214.**

Aspects of infusion **232** and curing **260** can be set to maximize a production rate of resin infusion and cure tool **202.** Aspects of infusion **232** and curing **260** can be set to maximize a production rate of cured composite part **252.**

Curing time **261** is set to fully cure preform **206** in resin infusion and cure tool **202.** Curing time **261** can be from about 45 minutes to about 180 minutes.

In some illustrative examples, cured composite part **252** is removed from infusion and cure tool **202** while infusion and cure tool **202** is still warm. In some illustrative examples, cured composite part **252** is removed from infusion and cure tool **202** while infusion and cure tool **202** is at temperature **234,** removal temperature **250,** in a range of 130-160 degrees Celsius.

Cured composite part **252** has a sufficient degree of stiffness and strength such that cured composite part **252** can be safely removed from resin infusion and cure tool **202.** Cured composite part **252** is sufficiently cured to maintain its shape without any distortion or damage after removal from resin infusion and cure tool **202.** Additionally, after removal from resin infusion and cure tool **202,** post-curing is not performed on cured composite part **252.** Cured composite part **252** has sufficient stiffness and strength to meet desired targets without additional post-curing.

Each of infusion temperature **236** and curing temperature **240** is a temperature value having a variance of less than ±5°C of the desired value. For example, a temperature of 100°C would refer to a temperature maintained between 95°C and 105°C.

Temperature **234** of resin infusion and cure tool **202** can be maintained/managed by electrical or resistive heating, inductive heating, liquid heating, steam heating, or the like. In some implementations, a mass and heat capacity of lower mold die **216** are configured to prevent large temperature fluctuations due to an external environment or any exothermic or endothermic reactions. For example, lower mold die **216** can comprise materials, such as steel, aluminum, Invar, and the like, selected for their high heat capacity. Similarly, a large mass can help maintain a constant temperature by acting as a heat sink to control exothermic reactions as well maintaining temperature during ambient losses.

Cured composite part **252** comprises a desired level of bonding between cured resin **258** and thermoplastic veil **254.** Due to temperature ramp **238,** resin **204** maintains mobility longer and can gel (vitrify) after thermoplastic veil **214** reaches melting temperature **244.** In some illustrative examples, thermoplastic veil **214** has melting temperature **244** over 170 degrees Celsius. As thermoplastic veil **214** melts it expands. After thermoplastic veil **214** melts, resin **204** forms a network around thermoplastic veil **214** while thermoplastic veil **214** is expanded, and resin **204** bonds with the surface of thermoplastic veil **214.**

As thermoplastic veil **214** cools back below the melting temperature **244,** thermoplastic veil **214** tries to contract back to its original size. As thermoplastic veil **214** is now bonded to resin **204,** thermoplastic veil **214** has nowhere to contract from, resulting in cavitation bubbles **256** in the center of thermoplastic veil **254.**

In some illustrative examples, at temperatures less than melting temperature **244,** such as infusion temperature **236,** resin **204** is still liquid and the thermoplastic veil **214** has diameter **246** of an original value. In some illustrative examples, diameter **246** can have an original value of approximately 35um. At temperature **234** at or above melting temperature **244** of thermoplastic veil **214,** thermoplastic veil **214** expands as it softens or melts with resin **204** still in a liquid state. In some illustrative examples, thermoplastic veil **214** can expand to have diameter **246** of approximately 45-50um as it softens or melts.

After resin **204** hardens thermoplastic veil **214** is locked into diameter **246** having the expanded size. As thermoplastic veil **214** cools below melting temperature **244** again thermoplastic veil **214** tries to shrink back to diameter **246** having the original size. With the outer surfaces of thermoplastic veil **214** locked in place, cavitation bubbles **256** are formed in the center of thermoplastic veil **254.**

The illustration of manufacturing environment **200** in **Figure 2** is not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, in some illustrative examples, resin infusion and cure tool **202** can further include a vacuum system (not depicted). The vacuum system can be configured to evacuate gap **224.** The vacuum system can create a vacuum in gap **224** prior to injecting resin **204** into gap **224.**

In some illustrative examples, curing temperature **240** is less than melting temperature **244.** In some illustrative examples, curing temperature **240** is sufficient to soften but not melt thermoplastic veil **214** such that thermoplastic veil **214** desirably bonds to resin **204.**

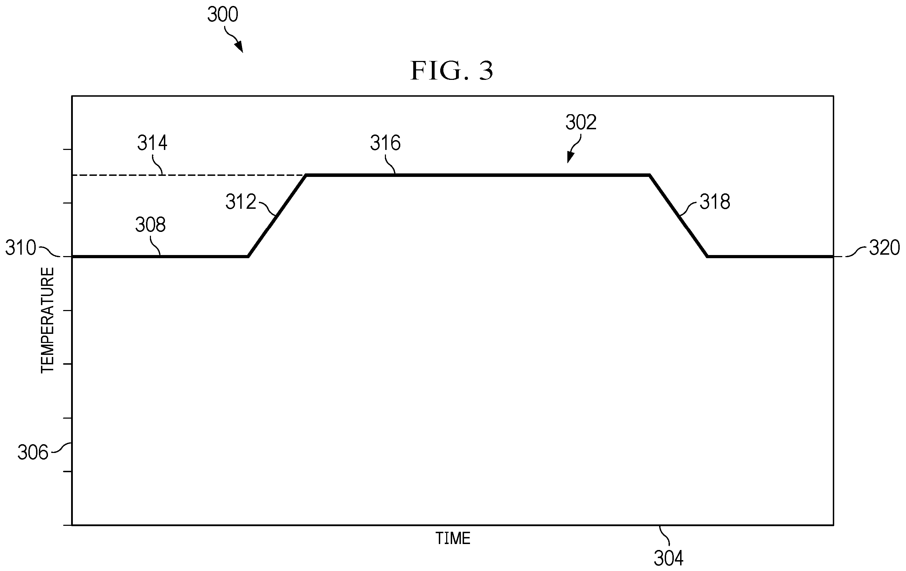

Turning now to **Figure 3****,** an illustration of a temperature chart for an infusion temperature and curing temperature for a high-rate resin infusion method is depicted in accordance with an illustrative example. Temperature cycle **302** can be used in resin infusion and cure tool **202** of **Figure 2** to form cured composite part **252** of **Figure 2****.**

Temperature chart **300** depicts temperature cycle **302** for infusion and curing of a composite material with a thermoplastic veil. Temperature chart **300** has time **304** as an X-axis and temperature **306** as a Y-axis. In temperature cycle **302,** infusion **308** is performed at infusion temperature **310.** In some illustrative examples, infusion temperature **310** is in the range of 130-160 degrees Celsius. After infusion **308,** temperature ramp **312** occurs as temperature **306** increases to curing temperature **314.** In some illustrative examples, temperature ramp **312** to cure between infusion temperature **310** and curing temperature **314** has a ramp rate of 1-3 degrees Celsius/min. In some illustrative examples, curing temperature **314** is in the range of 165-190 degrees Celsius. In some illustrative examples, a difference between infusion temperature **310** and curing temperature **314** is 40 degrees Celsius or less.

As depicted, curing **316** is carried out at curing temperature **314.** In some illustrative examples, curing **316** takes between 45-180 minutes. Following curing **316,** temperature ramp **318** reduces the temperature of the composite material.

The cured composite part is removed at removal temperature **320.** In some illustrative examples, removal temperature **320** is approximately the same as infusion temperature **310.** In some illustrative examples, removal temperature **320** is in the range of 130-160 degrees Celsius.

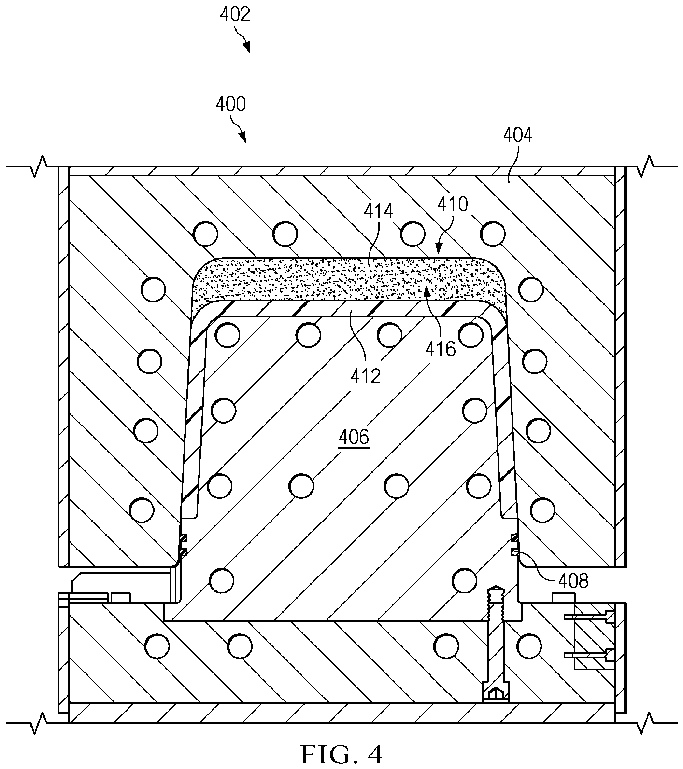

Turning now to **Figure 4****,** an illustration of a resin infusion and cure tool is depicted in accordance with an illustrative example. Resin infusion and cure tool **400** is a physical implementation of resin infusion and cure tool **202** of **Figure 2****.** Temperature cycle **302** can be performed in resin infusion and cure tool **400** to infuse and cure a composite preform.

Resin infusion and cure tool **400** comprises upper mold die **404** and lower mold die **406** sealed together by seals **408.** Sealed cavity **410** is present between upper mold die **404** and lower mold die **406.** Preform **412** is present on lower mold die **406** in sealed cavity **410.** Gap **416** is present between preform **412** and upper mold die **404** in sealed cavity **410.** Gap **416** corresponds to a cavity volume equivalent to an amount of resin **414** to infuse preform **412.** Resin **414** is injected into gap **416** of sealed cavity **410** while infusion and cure tool **400** is maintained at an infusion temperature.

View **402** is a cross-sectional view through resin infusion and cure tool **400** after resin **414** has been injected into sealed cavity **410** formed between upper mold die **404** and lower mold die **406.** By lowering upper mold die **404** towards lower mold die **406,** resin **414** is infused into preform **412.**

During infusion of resin **414** into preform **412,** resin infusion and cure tool **400** is kept at an infusion temperature. After resin **414** is infused into preform **412,** the infused preform is cured. To cure resin **414** in preform **412,** resin infusion and cure tool **400** is heated from the infusion temperature up to a curing temperature. In some illustrative examples, the difference between the infusion temperature and the curing temperature is up to 40 degrees Celsius.

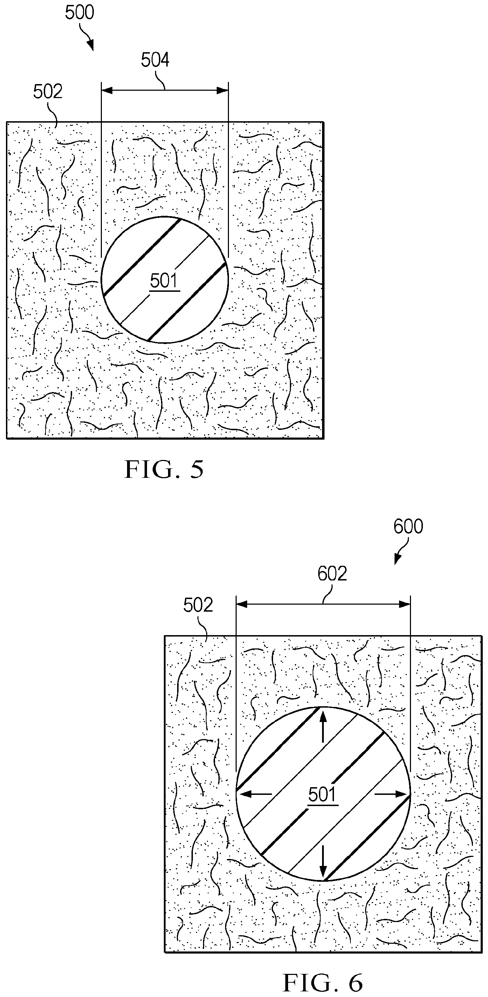

Turning now to **Figure 5****,** an illustration of interactions between a thermoplastic veil and resin prior to curing is depicted in accordance with an illustrative example. Thermoplastic veil **501** and resin **502** can be portions of a composite structure of aircraft **100** of **Figure 1****.** Thermoplastic veil **501** and resin **502** are illustrations of thermoplastic veil **214** and resin **204** of **Figure 2****.** Thermoplastic veil **501** and resin **502** can undergo temperature cycle **302** of **Figure 3****.** Thermoplastic veil **501** and resin **502** can be processed in resin infusion and cure tool **400** of **Figure 4****.**

In view **500,** thermoplastic veil **501** and resin **502** are at a temperature below a melting temperature of thermoplastic veil **501.** In view **500,** thermoplastic veil **501** is at an initial size, having first diameter **504.** In some illustrative examples, thermoplastic veil is in the range of approximately 30um to approximately 40um in diameter. In some illustrative examples, thermoplastic veil is approximately 35um in diameter.

Turning now to **Figure 6****,** an illustration of interactions between a thermoplastic veil and resin during curing is depicted in accordance with an illustrative example. In view **600,** thermoplastic veil **501** and resin **502** are at a curing temperature, such as curing temperature **314** of **Figure 3****.** In view **600,** thermoplastic veil **501** has expanded due to the curing temperature. In view **600,** thermoplastic veil **501** has diameter of **602.** In some illustrative examples, thermoplastic veil **501** can expand between 15%-45%. In some illustrative examples, thermoplastic veil **501** expands to have diameter **602** between approximately 45um to approximately 50um. In some illustrative examples, thermoplastic veil **501** expands to have diameter **602** between approximately 45um to approximately 55um.

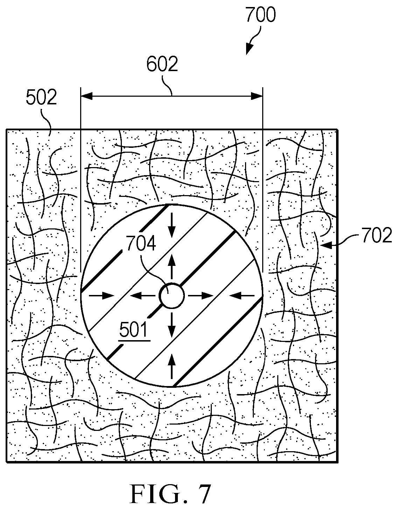

Turning now to **Figure 7****,** an illustration of interactions between a thermoplastic veil and resin after curing is depicted in accordance with an illustrative example. In view **700,** thermoplastic veil **501** and resin **502** have been cooled below a melting temperature of thermoplastic veil **501.** As thermoplastic veil **501** cools back below the melting temperature, thermoplastic veil **501** tries to contract back to its original size. In view **700,** resin **502** has hardened into network **702,** and thermoplastic veil **501** is now bonded to resin **502.**

After resin **502** hardens, thermoplastic veil **501** is locked into the expanded size. As thermoplastic veil **501** cools below melting temperature, thermoplastic veil **501** tries to shrink back to size. Due to the bonding of thermoplastic veil **501** to resin **502,** thermoplastic veil **501** has nowhere to contract from resulting in a cavitation bubble in the center of the thermoplastic veil. With the outer surfaces of thermoplastic veil **501** locked in place, cavitation bubble **704** is formed in the center of thermoplastic veil **501.**

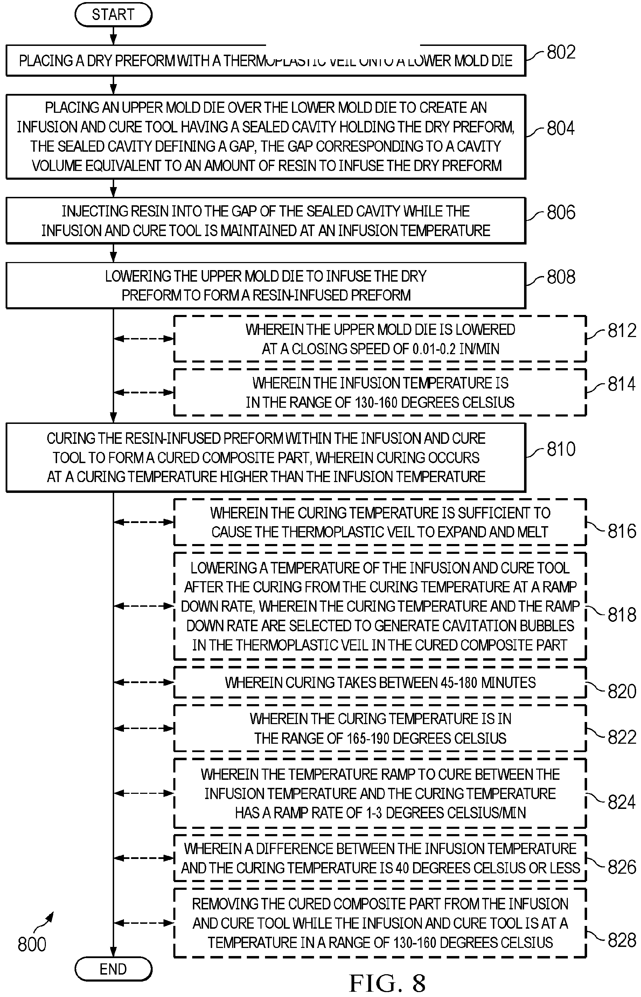

Turning now to **Figure 8****,** a flowchart of a method of compression resin transfer infusion is depicted in accordance with an illustrative example. Method **800** can be performed to form a composite part of aircraft **100** of Figure **1****.** Method **800** can be performed using resin infusion and cure tool **202** to form cured composite part **252** of Figure **2****.** Method **800** can be performed using temperature cycle **302.** Method **800** can be performed using resin infusion and cure tool **400** of **Figure 4****.** Method **800** can infuse and cure thermoplastic veil **501** and resin **502** of Figure **5****.**

Method **800** places a dry preform with a thermoplastic veil onto a lower mold die (operation **802**). Method **800** places an upper mold die over the lower mold die to create an infusion and cure tool having a sealed cavity holding the dry preform, the sealed cavity defining a gap, the gap corresponding to a cavity volume equivalent to an amount of resin to infuse the dry preform (operation **804**). Method **800** injects resin into the gap of the sealed cavity while the infusion and cure tool is maintained at an infusion temperature (operation **806**). Method **800** lowers the upper mold die to infuse the dry preform to form a resin-infused preform (operation **808**). Method **800** cures the resin-infused preform within the infusion and cure tool to form a cured composite part, wherein curing occurs at a curing temperature higher than the infusion temperature (operation **810**). Afterwards, method **800** terminates.

In some illustrative examples, the upper mold die is lowered at a closing speed of about 0.254-5.08 mm/min (0.01-0.2 in/min) (operation **812**). In some illustrative examples, the infusion temperature is in the range of 130-160 degrees Celsius (operation **814**). In some illustrative examples, the infusion temperature is selected based on a period of latency of the resin.

According to the presently claimed subject-matter, the curing temperature is sufficient to cause the thermoplastic veil to expand and melt (operation **816**). In some illustrative examples, the curing temperature is sufficient to cause the thermoplastic veil to expand and soften. In some illustrative examples, the curing temperature is sufficient to cause the thermoplastic veil to expand between 15%-45%. In some illustrative examples, the curing temperature is over **170** degrees Celsius.

In some illustrative examples, method **800** lowers a temperature of the infusion and cure tool after the curing from the curing temperature at a ramp down rate, wherein the curing temperature and the ramp down rate are selected to generate cavitation bubbles in the thermoplastic veil in the cured composite part (operation **818**). During curing the resin forms a network. During curing, the thermoplastic veil bonds to the resin. The cavitation bubbles can result from the thermoplastic veil attempting to shrink to an initial size after the thermoplastic veil bonds to the resin network. In some illustrative examples, curing takes between 45-180 minutes (operation **820**).

In some illustrative examples, the curing temperature is in the range of 165-190 degrees Celsius (operation **822**). In some illustrative examples, the temperature ramp to cure between the infusion temperature and the curing temperature has a ramp rate of 1-3 degrees Celsius/min (operation **824**). In some illustrative examples, a difference between the infusion temperature and the curing temperature is 40 degrees Celsius or less (operation **826)**.

In some illustrative examples, method **800** removes the cured composite part from the infusion and cure tool while the infusion and cure tool is at a temperature in a range of 130-160 degrees Celsius (operation **828**). In some illustrative examples, the cured composite part is removed from the infusion and cure tool at the infusion temperature. In some illustrative examples, the cured composite part is removed from the infusion and cure tool after a ramp down with approximately the same ramp rate as the temperature ramp to cure.

In some illustrative examples, the cured composite part is removed from the infusion and cure tool at approximately the infusion temperature. In some illustrative examples, removing the cured composite part while warm will reduce processing time for the cured composite part. Removing the cured composite part while warm will increase the throughput of the infusion and cure tool. Removing the cured composite part while warm can reduce the downtime between infusion of composite parts. Removing the cured composite part while warm can reduce the energy used to prepare the infusion and cure tool for infusion of the next dry preform.

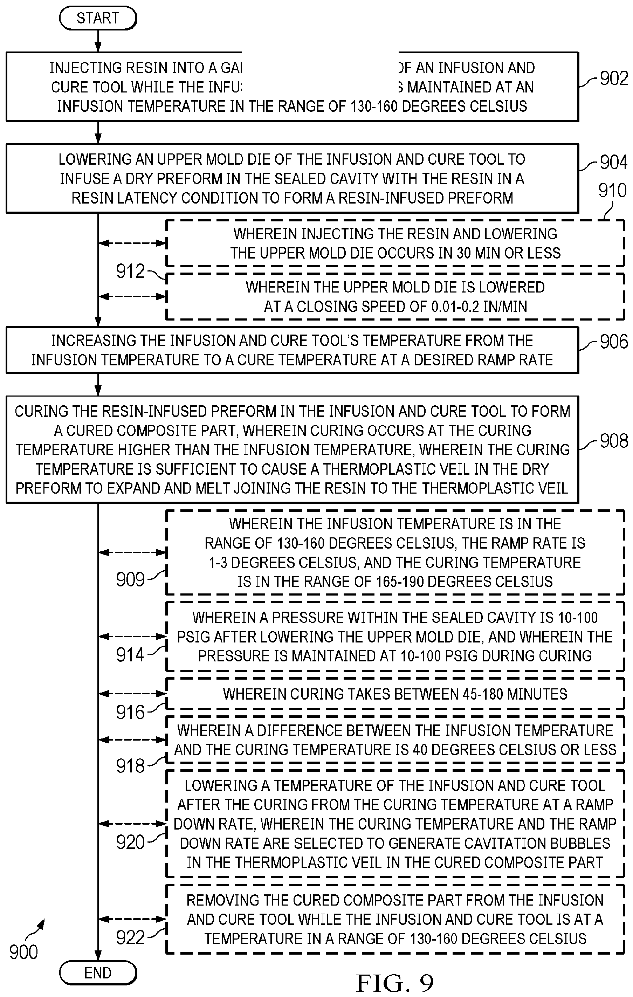

Turning now to **Figure 9****,** a flowchart of a method of compression resin transfer infusion is depicted in accordance with an illustrative example. Method **900** can be performed to form a composite part of aircraft **100** of **Figure 1****.** Method **900** can be performed using resin infusion and cure tool **202** to form cured composite part **252** of **Figure 2****.** Method **900** can be performed using temperature cycle **302.** Method **900** can be performed using resin infusion and cure tool **400** of **Figure 4****.** Method **900** can infuse and cure thermoplastic veil **501** and resin **502** of Figure **5****.**

Method **900** injects resin into a gap of a sealed cavity of an infusion and cure tool while the infusion and cure tool is maintained at an infusion temperature in the range of 130-160 degrees Celsius (operation **902**). Method **900** lowers an upper mold die of the infusion and cure tool to infuse a dry preform in the sealed cavity with the resin in a resin latency condition to form a resin-infused preform (operation **904**). Method **900** increases the infusion and cure tool's temperature from the infusion temperature to a curing temperature at a desired ramp rate (operation **906**). Method **900** cures the resin-infused preform in the infusion and cure tool to form a cured composite part, wherein curing occurs at the curing temperature higher than the infusion temperature, wherein the curing temperature is sufficient to cause a thermoplastic veil in the dry preform to expand and melt, joining the resin to the thermoplastic veil (operation **908**). Afterwards, method **900** terminates.

In some illustrative examples, the infusion temperature is in the range of 130-160 degrees Celsius, the ramp rate is 1-3 degrees Celsius, and the curing temperature is in the range of 165-190 degrees Celsius (operation **909**). In some illustrative examples, injecting the resin and lowering the upper mold die occurs in 30 min or less (operation **910**). The injection time can be selected based on the latency time.

In some illustrative examples, the upper mold die is lowered at a closing speed of about 0.254-5.08 mm/min (0.01-0.2 in/min) (operation **912**). Lowering the upper mold die infuses the resin into the dry preform through the thickness of the dry preform.

In some illustrative examples, a pressure within the sealed cavity is about 68.9-689.5 kPa (10-100 psig) after lowering the upper mold die, and wherein the pressure is maintained at about 68.9-689.5 kPa (10-100 psig) during curing (operation **914**). In some illustrative examples, curing takes between 45-180 minutes (operation **916**). In some illustrative examples, a difference between the infusion temperature and the curing temperature is 40 degrees Celsius or less (operation **918**).

In some illustrative examples, method **900** lowers a temperature of the infusion and cure tool after the curing from the curing temperature at a ramp down rate, wherein the curing temperature and the ramp down rate are selected to generate cavitation bubbles in the thermoplastic veil in the cured composite part (operation **920**). The cavitation bubbles are generated by the thermoplastic veil attempting to shrink to an initial diameter after bonding to the cured resin.

In some illustrative examples, method **900** removes the cured composite part from the infusion and cure tool while the infusion and cure tool is at a temperature in a range of 130-160 degrees Celsius (operation **922**). In some illustrative examples, the cured composite part is removed from the infusion and cure tool at approximately the infusion temperature. In some illustrative examples, removing the cured composite part while warm will reduce processing time for the cured composite part. Removing the cured composite part while warm will increase the throughput of the infusion and cure tool. Removing the cured composite part while warm can reduce the downtime between infusion of composite parts. Removing the cured composite part while warm can reduce the energy used to prepare the infusion and cure tool for infusion of the next dry preform.

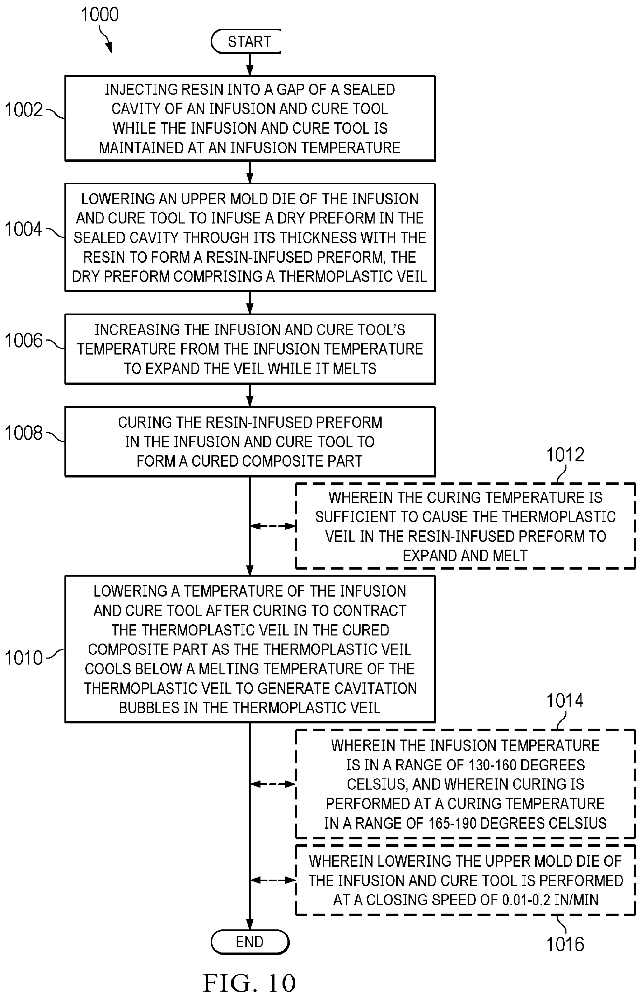

Turning now to **Figure 10****,** a flowchart of a method of compression resin transfer infusion to form cavitation bubbles in the cured composite part is depicted in accordance with an illustrative example. Method **1000** can be performed to form a composite part of aircraft **100** of **Figure 1****.** Method **1000** can be performed using resin infusion and cure tool **202** to form cured composite part **252** of **Figure 2****.** Method **1000** can be performed using temperature cycle **302.** Method **1000** can be performed using resin infusion and cure tool **400** of **Figure 4****.** Method **1000** can infuse and cure thermoplastic veil **501** and resin **502** of **Figure 5****.**

Method **1000** injects resin into a gap of a sealed cavity of an infusion and cure tool while the infusion and cure tool is maintained at an infusion temperature (operation **1002**). Method **1000** lowers an upper mold die of the infusion and cure tool to infuse a dry preform in the sealed cavity through its thickness with the resin to form a resin-infused preform, the dry preform comprising a thermoplastic veil (operation **1004**). Method **1000** increases the infusion and cure tool's temperature from the infusion temperature to expand the thermoplastic veil while it melts (operation **1006**). Method **1000** cures the resin-infused preform in the infusion and cure tool to form a cured composite part (operation **1008**). Method **1000** lowers a temperature of the infusion and cure tool after curing to contract the thermoplastic veil in the cured composite part as the thermoplastic veil cools below a melting temperature of the thermoplastic veil to generate cavitation bubbles in the thermoplastic veil (operation **1010**). Afterwards, method **1000** terminates.

According to the presently claimed subject-matter, the curing temperature is sufficient to cause the thermoplastic veil in the resin-infused preform to expand and melt (operation **1012**). In some illustrative examples, the curing temperature is greater than a melting temperature of the thermoplastic veil. In some illustrative examples, the curing temperature is selected so that thermoplastic veil expands sufficiently to cause a cavitation bubble after the thermoplastic veil cools.

In some illustrative examples, the infusion temperature is in a range of 130-160 degrees Celsius, and wherein curing is performed at a curing temperature in a range of 165-190 degrees Celsius (operation **1014**). In some illustrative examples, lowering the upper mold die of the infusion and cure tool is performed at a closing speed of about 0.254-5.08 mm/min (0.01-0.2 in/min) (operation **1016**).

As used herein, the phrase "at least one of," when used with a list of items, means different combinations of one or more of the listed items may be used and only one of each item in the list may be needed. For example, "at least one of item A, item B, or item C" may include, without limitation, item A, item A and item B, or item B. This example also may include item A, item B, and item C or item B and item C. Of course, any combinations of these items may be present. In other examples, "at least one of" may be, for example, without limitation, two of item A; one of item B; and ten of item C; four of item B and seven of item C; or other suitable combinations. The item may be a particular object, thing, or a category. In other words, at least one of means any combination items and number of items may be used from the list but not all of the items in the list are required.

As used herein, "a number of," when used with reference to items means one or more items.

Additionally, all numerical values are "about" or "approximately" the indicated value, and take into account experimental error and variations that would be expected by a person having ordinary skill in the art. It should be appreciated that all numerical values and ranges disclosed herein are approximate values and ranges. The terms "about" or "substantial" and "substantially" or "approximately," with reference to amounts or measurement values, are meant that the recited characteristic, parameter, or values need not be achieved exactly. Rather, deviations or variations, including, for example, tolerances, measurement error, measurement accuracy limitations, and other factors known to those skilled in the art, may occur in amounts that do not preclude the effect that the characteristic was intended to provide. As used herein, "about" is to mean within+/- 10 % of a stated target value, maximum, or minimum value.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step.

In some alternative implementations of an illustrative example, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. Some blocks may be optional. For example, operation **812** through operation **828** may be optional. As another example, operation **910** through operation **922** may be optional. As a further example, operation **1012** may be optional.

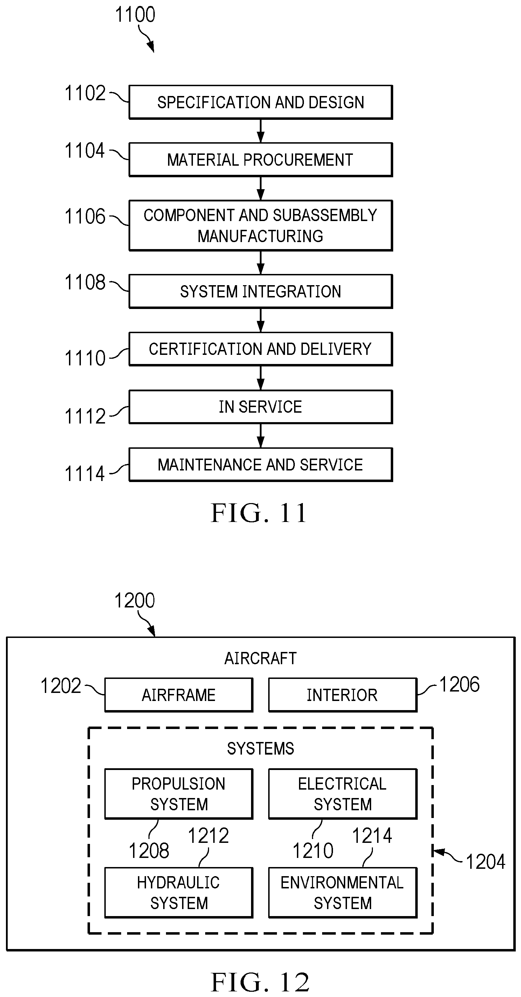

Illustrative examples of the present disclosure may be described in the context of aircraft manufacturing and service method **1100** as shown in **Figure 11** and aircraft **1200** as shown in **Figure 12****.** Turning first to **Figure 11****,** an illustration of an aircraft manufacturing and service method in a form of a block diagram is depicted in accordance with an illustrative example. During pre-production, aircraft manufacturing and service method **1100** may include specification and design **1102** of aircraft **1200** in **Figure 12** and material procurement **1104.**

During production, component and subassembly manufacturing **1106** and system integration **1108** of aircraft **1200** takes place. Thereafter, aircraft **1200** may go through certification and delivery **1110** in order to be placed in service **1112.** While in service **1112** by a customer, aircraft **1200** is scheduled for routine maintenance and service **1114,** which may include modification, reconfiguration, refurbishment, or other maintenance and service.

Each of the processes of aircraft manufacturing and service method **1100** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 12****,** an illustration of an aircraft in a form of a block diagram is depicted in which an illustrative example may be implemented. In this example, aircraft **1200** is produced by aircraft manufacturing and service method **1100** of **Figure 11** and may include airframe **1202** with plurality of systems **1204** and interior **1206.** Examples of systems **1204** include one or more of propulsion system **1208,** electrical system **1210,** hydraulic system **1212,** and environmental system **1214.** Any number of other systems may be included.

Apparatuses and methods embodied herein may be employed during at least one of the stages of aircraft manufacturing and service method **1100.** One or more illustrative examples may be manufactured or used during at least one of component and subassembly manufacturing **1106,** system integration **1108,** in service **1112,** or maintenance and service **1114** of **Figure 11****.**

The illustrative examples provide compression resin transfer infusion. A period of resin latency is a period in which the resin remains liquid and does not begin curing. In some illustrative examples, a period of resin latency is in the range of 20-60 min. In some illustrative examples, the resin maintains a viscosity of 100 cps or less. In some illustrative examples, the infusion temperature of the resin infusion and cure tool is in the range of 130-160°C. In some illustrative examples, a closing speed of lowering an upper mold die towards a lower mold die is in the range of about 0.254-5.08 mm/min (0.01-0.2 in/min). In some illustrative examples, a pressure within the sealed cavity of the resin infusion cure tool at the end of closing is in the range of about 68.9-689.5 kPa (10-100 psig).

The resin infusion and cure tool increases temperature from the infusion temperature to a curing temperature. In some illustrative examples, the difference between the infusion temperature and the curing temperature is 40°C or less. In some illustrative examples, a ramp rate from the infusion temperature to the curing temperature is in the range from 1-3°C/min.

In some illustrative examples, curing temperature is in the range of 165-190°C. During curing, the pressure in the sealed cavity of the resin infusion and cure tool remains at about 68.9-689.5 kPa (10-100 psig). In some illustrative examples, a cure time is in the range of 45-180 mins.

In some illustrative examples, the pressure remains at about 68.9-689.5 kPa (10-100 psig) during the temperature ramp down from the curing temperature to the part removal temperature. In some illustrative examples, the cured composite part is removed from a hot resin infusion and cure tool in the temperature range of 130-160°C. The cured composite part does not receive additional post cure after removal from the resin infusion and cure tool. The cured composite part comprises a desired level of bonding between the resin and the thermoplastic veil in the preform.

Due to the heat ramp, the resin maintains mobility longer and can gel (vitrify) after the thermoplastic veil reaches its melting temperature. In some illustrative examples, the thermoplastic veil melts over 170 degrees Celsius. As the thermoplastic veil melts it expands. After the thermoplastic veil melts, the resin forms a network around the expanded veil and bonds with the surface of the thermoplastic veil.

As the thermoplastic veil cools back below the melt temp, it tries to contract back to its original size. As the thermoplastic veil is now bonded to the resin it has nowhere to contract from, resulting in a cavitation bubble in the center of the thermoplastic veil.

In some illustrative examples, at temperatures less than the melting temperature, the resin is still liquid and the thermoplastic veil is at an original diameter, such as approximately 35um. At temperatures at or above a melting temperature of the thermoplastic veil, the thermoplastic veil expands as it softens or melts with the resin still in a liquid state. In some illustrative examples, the thermoplastic veil can expand to approximately 45-50um as it softens or melts.

After the resin hardens the thermoplastic veil is locked into the expanded size. As the thermoplastic veil cools below the melting temperature again it tries to shrink back to size. With the outer surfaces of the thermoplastic veil locked in place, a cavitation bubble is formed in the center of the thermoplastic veil.

## Claims

1. A method (800) of compression resin transfer infusion comprising:
placing (802) a dry preform (212, 412) with a thermoplastic veil (214, 501) onto a lower mold die (216, 406);
placing (804) an upper mold die (218, 404) over the lower mold die (216, 406) to create an infusion and cure tool (202, 400) having a sealed cavity (220, 410) holding the dry preform (212, 412), the sealed cavity (220, 410) defining a gap (224, 416), the gap (224, 416) corresponding to a cavity volume (226) equivalent to an amount of resin (204, 414, 502) to infuse the dry preform (212, 412);
injecting (806) resin (204, 414, 502) into the gap (224, 416) of the sealed cavity (220, 410) while the infusion and cure tool (202, 400) is maintained at an infusion temperature (236, 310);
lowering (808) the upper mold die (218, 404) to infuse the dry preform (212, 412) to form a resin-infused preform (208); and
curing (810, 260, 316) the resin-infused preform (208) within the infusion and cure tool (202, 400) to form a cured composite part (252), wherein curing (260, 316) occurs at a curing temperature (240, 314) higher than the infusion temperature (236, 310), wherein (816) the curing temperature (240, 314) is sufficient to cause the thermoplastic veil (214, 501) to expand and melt.

2. The method of claim 1, wherein, when the curing temperature (240, 314) is sufficient to cause the thermoplastic veil (214, 501) to expand and melt such that the resin bonds to the thermoplastic veil.

3. The method of claim 1 or 2, wherein, when the thermoplastic veil (214, 501) expands and melts, the resin (204, 414, 502) is still in a liquid state.

4. The method (800) of any one of the preceding claims, wherein the curing temperature is sufficient to cause the thermoplastic veil to expand between 15%-45%.

5. The method (800) of any one of the preceding claims, further comprising:
lowering (818) a temperature of the infusion and cure tool (202, 400) after the curing (260, 316) from the curing temperature (240, 314) at a ramp down rate (249), wherein the curing temperature (240, 314) and the ramp down rate (249) are selected to generate cavitation bubbles (256, 704) in the thermoplastic veil (214, 501) in the cured composite part (252).

6. The method (800) of claim 4, wherein the cavitation bubbles (256, 704) are formed in the center of the thermoplastic veil (501).

7. The method (800) of any one of the preceding claims, wherein:
(812) the upper mold die (218, 404) is lowered at a closing speed (230) of about 0.254-5.08 mm/min (0.01-0.2 in/min).

8. The method (800) of any one of the preceding claims, wherein:
(820) curing (260, 316) takes between 45-180 minutes.

9. The method (800) of any one of the preceding claims, wherein:
(814) the infusion temperature (236, 310) is in a range of 130-160 degrees Celsius.

10. The method (800) of any one of the preceding claims, wherein:
(822) the curing temperature (240, 314) is in a range of 165-190 degrees Celsius.

11. The method (800) of any one of the preceding claims, wherein (824) a temperature ramp (238, 312) to cure between the infusion temperature (236, 310) and the curing temperature (240, 314) has a ramp rate (239) of 1-3 degrees Celsius/min.

12. The method (800) of any one of the preceding claims, wherein (826) a difference between the infusion temperature (236, 310) and the curing temperature (240, 314) is 40 degrees Celsius or less.

13. The method (800) of any one of the preceding claims, further comprising:
removing (828) the cured composite part (252) from the infusion and cure tool (202, 400) while the infusion and cure tool (202, 400) is at a temperature (234) in a range of 130-160 degrees Celsius.

14. The method (900) of any one of the previous claims, wherein:
(914) a pressure (242) within the sealed cavity (220, 410) is about 68.9-689.5 kPa (10-100 psig) after lowering the upper mold die (218, 404), and wherein the pressure (242) is maintained at about 68.9-689.5 kPa (10-100 psig) during curing (260, 316).

15. The method (900) of any one of the previous claims, wherein (910) injecting the resin (204, 414, 502) and lowering the upper mold die (218, 404) occurs in 30 min or less.

## Patentansprüche

1. Verfahren (800) für eine Kompressionsharztransferinfusion, umfassend:
Platzieren (802) eines trockenen Vorformlings (212, 412) mit einem thermoplastischen Schleier (214, 501) auf eine untere Gießform (216, 406);
Platzieren (804) einer oberen Gießform (218, 404) über der unteren Gießform (216, 406), um ein Infusions- und Aushärtungswerkzeug (202, 400) zu schaffen, das einen abgedichteten Hohlraum (220, 410) aufweist, der den trockenen Vorformling (212, 412) aufnimmt, wobei der abgedichtete Hohlraum (220, 410) einen Spalt (224, 416) definiert, wobei der Spalt (224, 416) einem Hohlraumvolumen (226) entspricht, das einer Harzmenge (204, 414, 502) äquivalent ist, um den trockenen Vorformling (212, 412) zu durchtränken;
Einspritzen (806) von Harz (204, 414, 502) in den Spalt (224, 416) des abgedichteten Hohlraums (220, 410), während das Infusions- und Aushärtungswerkzeug (202, 400) bei einer Infusionstemperatur (236, 310) gehalten wird;
Absenken (808) der oberen Gießform (218, 404), um den trockenen Vorformling (212, 412) zu durchtränken, um einen harzdurchtränkten Vorformling (208) auszubilden; und
Aushärten (810, 260, 316) des harzdurchtränkten Vorformlings (208) innerhalb des Infusions- und Aushärtewerkzeugs (202, 400), um einen ausgehärteten Verbundwerkstoffteil (252) auszubilden, wobei das Aushärten (260, 316) bei einer Aushärtetemperatur (240, 314) erfolgt, die höher ist als die Infusionstemperatur (236, 310), wobei (816) die Aushärtetemperatur (240, 314) ausreichend ist, um zu bewirken, dass sich der thermoplastische Schleier (214, 501) ausdehnt und schmilzt.

2. Verfahren nach Anspruch 1, wobei, wenn die Aushärtetemperatur (240, 314) ausreichend ist, um zu bewirken, dass sich der thermoplastische Schleier (214, 501) ausdehnt und schmilzt, derart
dass das Harz an den thermoplastischen Schleier bindet.

3. Verfahren nach Anspruch 1 oder 2, wobei, wenn sich der thermoplastische Schleier (214, 501) ausdehnt und schmilzt, das Harz (204, 414, 502) noch in einem flüssigen Zustand ist.

4. Verfahren (800) nach einem der vorstehenden Ansprüche, wobei die Aushärtetemperatur ausreichend ist, um zu bewirken, dass sich der thermoplastische Schleier um 15 %-45 % ausdehnt.

5. Verfahren (800) nach einem der vorstehenden Ansprüche, ferner umfassend:
Absenken (818) einer Temperatur des Infusions- und Aushärtungswerkzeugs (202, 400) nach dem Aushärten (260, 316) von der Aushärtetemperatur (240, 314) mit einer Abwärts-Rampenrate (249), wobei die Aushärtetemperatur (240, 314) und die Abwärts-Rampenrate (249) ausgewählt sind, um Kavitationsblasen (256, 704) in dem thermoplastischen Schleier (214, 501) in dem ausgehärteten Verbundwerkstoffteil (252) zu erzeugen.

6. Verfahren (800) nach Anspruch 4, wobei die Kavitationsblasen (256, 704) in der Mitte des thermoplastischen Schleiers (501) ausgebildet werden.

7. Verfahren (800) nach einem der vorstehenden Ansprüche, wobei:
(812) die obere Gießform (218, 404) mit einer Schließgeschwindigkeit (230) von etwa 0,254-5,08 mm/min (0,01-0,2 in/min) abgesenkt wird.

8. Verfahren (800) nach einem der vorstehenden Ansprüche, wobei:
(820) das Aushärten (260, 316) zwischen 45-180 Minuten dauert.

9. Verfahren (800) nach einem der vorstehenden Ansprüche, wobei:
(814) die Infusionstemperatur (236, 310) in einem Bereich von 130-160 Grad Celsius liegt.

10. Verfahren (800) nach einem der vorstehenden Ansprüche, wobei:
(822) die Aushärtetemperatur (240, 314) in einem Bereich von 165-190 Grad Celsius liegt.

11. Verfahren (800) nach einem der vorstehenden Ansprüche, wobei (824) eine Temperaturrampe (238, 312), um zwischen der Infusionstemperatur (236, 310) und der Aushärtetemperatur (240, 314) auszuhärten, eine Rampenrate (239) von 1-3 Grad Celsius/min aufweist.

12. Verfahren (800) nach einem der vorstehenden Ansprüche, wobei (826) eine Differenz zwischen der Infusionstemperatur (236, 310) und der Aushärtetemperatur (240, 314) 40 Grad Celsius oder weniger beträgt.

13. Verfahren (800) nach einem der vorstehenden Ansprüche, ferner umfassend:
Entfernen (828) des ausgehärteten Verbundwerkstoffteils (252) aus dem Infusions- und Aushärtewerkzeug (202, 400), während sich das Infusions- und Aushärtewerkzeug (202, 400) bei einer Temperatur (234) in einem Bereich von 130-160 Grad Celsius befindet.

14. Verfahren (900) nach einem der vorstehenden Ansprüche, wobei:
(914) ein Druck (242) innerhalb des abgedichteten Hohlraums (220, 410) etwa 68,9-689,5 kPa (10-100 psig) nach dem Absenken der oberen Gießform (218, 404) beträgt, und wobei der Druck (242) während des Aushärtens (260, 316) bei etwa 68,9-689,5 kPa (10-100 psig) gehalten wird.

15. Verfahren (900) nach einem der vorstehenden Ansprüche, wobei (910) das Einspritzen des Harzes (204, 414, 502) und das Absenken der oberen Gießform (218, 404) in 30 min oder weniger erfolgt.

## Revendications

1. Procédé (800) d'infusion par transfert de résine de compression comprenant :
le placement (802) d'une préforme sèche (212, 412) avec un voile thermoplastique (214, 501) sur une matrice de moulage inférieure (216, 406) ;
le placement (804) d'une matrice de moulage supérieure (218, 404) au-dessus de la matrice de moulage inférieure (216, 406) afin de créer un outil d'infusion et de polymérisation (202, 400) ayant une cavité scellée (220, 410) contenant la préforme sèche (212, 412), la cavité scellée (220, 410) définissant un espace (224, 416), l'espace (224, 416) correspondant à un volume de cavité (226) équivalent à une quantité de résine (204, 414, 502) pour infuser la préforme sèche (212, 412) ;
l'injection (806) de résine (204, 414, 502) dans l'espace (224, 416) de la cavité scellée (220, 410) alors que l'outil d'infusion et de polymérisation (202, 400) est maintenu à une température d'infusion (236, 310) ;
l'abaissement (808) de la matrice de moulage supérieure (218, 404) pour infuser la préforme sèche (212, 412) afin de former une préforme infusée de résine (208) ; et
la polymérisation (810, 260, 316) de la préforme infusée de résine (208) à l'intérieur de l'outil d'infusion et de polymérisation (202, 400) afin de former une pièce composite polymérisée (252), dans lequel la polymérisation (260, 316) se produit à une température de polymérisation (240, 314) supérieure à la température d'infusion (236, 310), dans lequel (816) la température de polymérisation (240, 314) est suffisante pour amener le voile thermoplastique (214, 501) à se dilater et à fondre.

2. Procédé selon la revendication 1, dans lequel, lorsque la température de polymérisation (240, 314) est suffisante pour amener le voile thermoplastique (214, 501) à se dilater et à fondre de sorte que la résine se lie au voile thermoplastique.

3. Procédé selon la revendication 1 ou 2, dans lequel, lorsque le voile thermoplastique (214, 501) se dilate et fond, la résine (204, 414, 502) est encore dans un état liquide.

4. Procédé (800) selon l'une quelconque des revendications précédentes, dans lequel la température de polymérisation est suffisante pour amener le voile thermoplastique à se dilater entre 15 % et 45 %.

5. Procédé (800) selon l'une quelconque des revendications précédentes, comprenant en outre :
la diminution (818) d'une température de l'outil d'infusion et de polymérisation (202, 400) après la polymérisation (260, 316) à partir de la température de polymérisation (240, 314) à une vitesse de descente (249), dans lequel la température de polymérisation (240, 314) et la vitesse de descente (249) sont choisies pour générer des bulles de cavitation (256, 704) dans le voile thermoplastique (214, 501) de la pièce composite polymérisée (252).

6. Procédé (800) selon la revendication 4, dans lequel les bulles de cavitation (256, 704) sont formées au centre du voile thermoplastique (501).

7. Procédé (800) selon l'une quelconque des revendications précédentes, dans lequel :
(812) la matrice de moulage supérieure (218, 404) est abaissée à une vitesse de fermeture (230) d'environ 0,254 à 5,08 mm/min (0,01 à 0,2 po./min).

8. Procédé (800) selon l'une quelconque des revendications précédentes, dans lequel :
(820) la polymérisation (260, 316) prend entre 45 et 180 minutes.

9. Procédé (800) selon l'une quelconque des revendications précédentes, dans lequel :
(814) la température d'infusion (236, 310) est comprise dans une plage allant de 130 à 160 degrés Celsius.

10. Procédé (800) selon l'une quelconque des revendications précédentes, dans lequel :
(822) la température de polymérisation (240, 314) est comprise dans une plage allant de 165 à 190 degrés Celsius.

11. Procédé (800) selon l'une quelconque des revendications précédentes, dans lequel (824) une rampe de température (238, 312) pour la polymérisation entre la température d'infusion (236, 310) et la température de polymérisation (240, 314) a une vitesse de montée (239) de 1 à 3 degrés Celsius/min.

12. Procédé (800) selon l'une quelconque des revendications précédentes, dans lequel (826) une différence entre la température d'infusion (236, 310) et la température de polymérisation (240, 314) est de 40 degrés Celsius ou moins.

13. Procédé (800) selon l'une quelconque des revendications précédentes, comprenant en outre :
le retrait (828) de la pièce composite polymérisée (252) de l'outil d'infusion et de polymérisation (202, 400) alors que l'outil d'infusion et de polymérisation (202, 400) est à une température (234) comprise entre 130 et 160 degrés Celsius.

14. Procédé (900) selon l'une quelconque des revendications précédentes, dans lequel :
(914) une pression (242) à l'intérieur de la cavité scellée (220, 410) est d'environ 68,9 à 689,5 kPa (10 à 100 psig) après l'abaissement de la matrice de moulage supérieure (218, 404), et dans lequel la pression (242) est maintenue à environ 68,9 à 689,5 kPa (10 à 100 psig) pendant la polymérisation (260, 316).

15. Procédé (900) selon l'une quelconque des revendications précédentes, dans lequel (910) l'injection de la résine (204, 414, 502) et l'abaissement de la matrice de moulage supérieure (218, 404) se produisent en 30 min ou moins.
